Europäisches Patentamt

European Patent Office

Office européen des brevets

(11) Publication number: **0 186 174 B1**

(12) **EUROPEAN PATENT SPECIFICATION**

(45) Date of publication of patent specification: 04.09.91  (51) Int. Cl.⁵: **C08F 10/00, C08F 4/69**

(21) Application number: 85116466.5

(22) Date of filing: 23.12.85

The file contains technical information submitted after the application was filed and not included in this specification

(54) **Ethylene homopolymer and Copolymer polymerization process and the products produced therefrom.**

(30) Priority: 24.12.84 US 686043

(43) Date of publication of application:
02.07.86 Bulletin 86/27

(45) Publication of the grant of the patent:
04.09.91 Bulletin 91/36

(84) Designated Contracting States:
AT BE CH DE FR GB IT LI LU NL SE

(56) References cited:
EP-A- 0 002 272    EP-A- 0 002 673
DE-A- 2 149 681    FR-A- 1 175 121
GB-A- 1 435 273    US-A- 3 219 646
US-A- 3 227 699    US-A- 4 247 421
US-A- 4 307 214

(73) Proprietor: **PHILLIPS PETROLEUM COMPANY**
**5th and Keeler**
**Bartlesville Oklahoma 74004(US)**

(72) Inventor: **Hogan, John Paul**
**3908 S.E. Lester Avenue**
**Bartlesville Oklahoma 74006(US)**
Inventor: **Nease, Charles Rung**
**416 N.E. Cummings Avenue**
**Bartlesville Oklahoma 74006(US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Post-**
**fach 86 06 20**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 186 174 B1

## Description

This invention relates to the production of ethylene homopolymers and copolymers. In another aspect, this invention relates to a process for producing ethylene homopolymers and copolymers having exceptionally good environmental stress cracking resistance (ESCR). In another aspect, this invention also relates to the products resulting from the practice of said process.

One of the more important properties of polyethylene homopolymers and copolymers is their ESCR. In most polymerization processes, one can improve the ESCR of ethylene homopolymers or copolymers by lowering the melt index and/or density and/or by increasing the mono-1-olefin content in the case of copolymers. However, it is not always practical to simply lower the melt index or density or increase the comonomer content of copolymers, since other properties may be adversely affected. As used in the specification and the claims, ESCR means the environmental stress cracking resistance as determined by ASTM test D-1693, Condition A.

It has been discovered that the ESCR of ethylene homopolymers and copolymers can be increased without lowering the melt index and/or density or increasing the mono-1-olefin comonomer content in the case of copolymers by the use of certain modifying agents prior to or during the polymerization reaction.

Accordingly the invention relates to a process for the polymerization of ethylene and mixtures of ethylene with at least one other mono-1-olefin by employing a polymerization catalyst exposed to a modifying agent prior to or during the polymerization reaction, as defined in claim 1.

In one particular embodiment of the invention, the addition of approximately 0.2 parts per million of carbon monoxide based on total olefin present during the polymerization reaction as the modifying agent resulted in an ethylene/1-hexene copolymer having an ESCR approximately two and one-half times greater than the copolymer produced under identical conditions except for the presence of the carbon monoxide modifying agent wherein the melt index and density were essentially identical in the two copolymers. Further according to the invention, new and useful ethylene homopolymers and copolymers are produced employing the process.

Ethylene homopolymers and copolymers are produced according to the process of the present invention. As used herein, the term "copolymers" is intended to include the polymers produced employing ethylene with one or more comonomers wherein such comonomers are selected from aliphatic mono-1-olefins containing from 3 to 10 carbon atoms per molecule. For example, mono-1-olefins suitable for use in the invention include propylene, 1-butene, 1-pentene, 1-hexene, 1-heptene, 3-methyl-butene-1, 4-methyl-pentene-1, 1-octene, 1-nonene and 1-decene. The amount of comonomer employed can be selected over a broad range; however, generally the amount of comonomer employed is within a range of 0.1 mole percent to 10 mole percent based upon the total moles of olefin (ethylene and comonomer) employed.

The catalysts suitable for use in the invention are those based upon chrome that produce polymers containing terminal vinyl unsaturation. For example, chromium oxide on a silica support is a chromium-based polyethylene catalyst widely known in the art. Such catalysts, particularly when the chromium component is supported on silica, have produced excellent results when used in the present invention and are particularly suitable for use in the invention. Further the substrate can be only silica or it can be other refractory metal oxides such as alumina, boria, magnesia, thoria, titania, zirconia and mixtures of any two or more thereof with or without silica. The refractory metal oxide support can be admixed in a hydrogel or dry state with the chromium compound employing well known techniques such as impregnation with an aqueous or non-aqueous solution of a chromium compound or including admixture of particulate chromium compounds. Further, such catalyst can be treated with titanium compounds by impregnation or coprecipitation. Some examples of chrome based catalysts suitable for use in the invention are disclosed in U.S. Patents 2,825,721; 3,887,494; 4,392,990 and 4,312,967 and U.S. Patent 3,900,457 related to silica supports.

The essential feature of the present invention is in the use of a modifying agent to treat the catalyst prior to or preferably during the polymerization reaction. A number of modifying agents are suitable for use in the invention and include those selected from carbon monoxide, carbonyl sulfide, hydrogen sulfide, oxygen, water, alcohols, aldehydes, ketones, mercaptans, amines, and mixtures of any two or more thereof. Some of the alcohols suitable for use in the invention include, for example, methanol, ethanol, 2-methoxy ethanol and isopropanol. Some aldehydes suitable for use in the invention include, for example, formaldehyde, acetaldehyde and propionaldehyde. Some ketones suitable for use in the invention include, for example, acetone, methyl-ethyl ketone and methyl-isobutyl ketone. Some amines suitable for use in the invention include, for example, methylamine, diethylamine and triethylamine.

Of the above-named treating agents, carbon monoxide and methanol are preferred because thus far they appear to be the most effective and convenient to use.

The amount of modifying agent employed is within the range of 0.01 to 2 parts per million by weight

2

(hereinafter referred to simply as parts per million or ppm) based on total olefin present during the polymerization reaction. In instances where the modifying agent is selected from carbon monoxide, carbonyl sulfide, hydrogen sulfide, oxygen, water and mixtures of any two or more thereof, the amount of modifying agent is more often within the range of 0.1 to 1 parts per million and most often within the range of 0.1 to 0.7 parts per million based on total olefin present during the polymerization reaction. When the modifying agent is selected from alcohols, aldehydes, ketones, mercaptans, and amines and mixtures of any two or more thereof, the amount of modifying agent is more often within the range of 0.2 to 2 parts per million and most often within the range of 0.2 to 1.5 parts per million based on total olefin present during the polymerization reaction.

Since one aspect of the present invention is a process that produces ethylene-type polymers having an increase in ESCR compared to the polymer produced under identical conditions except for the presence of the modifying agent, another way to express the amount of modifying agent is in terms of the amount necessary to increase the ESCR of the polymer produced. In other words, the minimum amount of modifying agent required is that amount necessary to increase the ESCR of the polymer produced compared to the polymer produced under identical conditions except for the presence of the modifying agent. As described in the background of the invention, this invention is based on the discovery that the ESCR of ethylene-type polymers can be increased without changing the melt index or density or without increasing the comonomer content. Thus, the term "under identical conditions" referred to in this paragraph and elsewhere in this disclosure implicitly means that the polymers produced with and without the modifying agent have essentially the same melt index, density and comonomer content. Generally the amount of modifying agent employed will be that amount necessary to at least double the ESCR of the polymer and in most cases triple the ESCR of the polymer compared to the polymer produced under identical conditions except for the presence of the modifying agent. The numerical ranges for the modifying agents described above generally provide a two to three fold improvement in ESCR.

Also, with respect to the amount of modifying agent, it is important to point out that the modifying agents will substantially reduce the activity of the catalyst if excessive amounts are used. According to the invention, it is generally possible to use the modifying agent in an amount to sufficiently increase the ESCR without decreasing the catalyst activity substantially. Generally the amount of modifying agent employed is that amount which will not reduce the catalyst activity more than 25% when the catalyst activity is calculated in terms of grams of polymer per gram of catalyst per hour (g/g/hr) and when the catalyst activity is compared to that of the catalyst in the absence of the modifying agent under otherwise identical polymerization times and conditions. More often, the amount of modifying agent employed will be that amount which will not reduce the catalyst activity less than 10% and more preferably 5% compared to the catalyst activity in the absence of a modifying agent.

The other polymerization reaction parameters employed in accordance with the present invention are essentially the same as the polymerization parameters employed when no modifying agent is employed, considering the type of homopolymer or copolymer produced, the catalyst employed, the polymerization medium, etc. The process of the present invention is suitable for use in bulk, gas phase or slurry phase polymerization reactions. All of these polymerization processes are well known by those skilled in the art and need no further elaboration.

## EXAMPLE

This example describes a typical polymerization procedure used herein to prepare ethylene-hexene-1 copolymers and illustrates the effect the presence of a small amount of modifying agent, specifically carbon monoxide (CO), during polymerization has on the performance properties of the polymeric products. The catalyst, 30 mℓ of a 1 weight percent Cr on silica (Davison™ 969 MSB), manufactured by the Davison Chemical Company, Baltimore, Maryland, was first activated by placing it in a vertical quartz tube, about 2.5 cm i.d. x 46 cm (about 1 inch I.D. x 18 inches) having an integral fritted catalyst support and passing air through the catalyst at 52 Liters/hour while heating the tube and catalyst at 400°C/hour to 650°C and holding at 650°C for 5 hours. The catalyst was removed and stored in a dry glass flask under a nitrogen atmosphere and placed in a desiccator.

Runs 1 through 5 were carried out employing the catalyst described above. The amount of modifying agent employed in each run is shown in Table 1 below and each run was carried out in the following manner.

To a nitrogen-purged, methanol jacketed (110°C), stainless steel 2 Liter capacity reactor fitted with a stirrer was charged about 0.05 grams of the activated catalyst described above plus 1.25 pounds (567 grams) of isobutane and the stirrer started. Ethylene was then added until the reactor pressure reached 3278 kPa gauge (475 psig). During this pressure-up period there was also added 2.1 g of 1-hexene. In addition, in runs 2 through 5 the quantity of modifying agent (CO) was swept into the reactor. When the desired polymerization pressure was reached, 3278 kPa gauge (475 psig) there was a short induction period when no significant amount of ethylene was taken up as determined by a rotameter. The ethylene take-up then began and the run was continued until an estimated productivity of 4000 grams of polymer/gram catalyst was reached (usually about 1 hour). Temperature was controlled at about 102°C by the pressured methanol in the reactor jacket. This estimated productivity was compiled from calibrated ethylene rotometer readings taken at 10-minute intervals. During each run, 1-hexene was simultaneously added at about 0.5 weight percent of the rate of ethylene being continuously charged. A total of about 3 grams of hexene was added to the reactor including about 2 grams added during the pressure-up period to establish the required concentration in the reactor.

Each run was terminated by venting the reactor (de-pressurizing) and cooling below the boiling point of the pressurized methanol heating fluid. The polymer was removed and weighed to determine the exact polymer yield (typically about 200 g). The polymer was added to a plastic jar along with a stabilizer package containing three antioxidants, 0.05 weight percent each of butylated hydroxy toluene (BHT), dilauryl-thio-dipropionate (DLTDP) and 4,4'-thiobis(6-tert-butyl-m-cresol) (Santonox™ R), made by Monsanto Chemical Company, St. Louis, Missouri, all dissolved in acetone. After tumbling and mixing for several minutes, the contents were poured into a flat pan and dried in a vacuum oven at 100°C for 30 minutes. The polymer was next melt-mixed on a two-roll mill for three minutes at about 150-160°C (melting point of polymer 130°C). The polymer was then chopped into small pieces of 3.2 to 6.4 mm (0.125 to 0.25 inch) diameter and the (HLMI) and density were measured. In addition, the ESCR was determined. The results of each run are listed in Table I below.

In this example, several control runs are exhibited which, as near as possible, fall within the same ranges of HLMI and density as the invention runs with which they are correlated, since both these properties affect ESCR strongly (lower HLMI's and lower densities typically result in high ESCR's).

TABLE I

Effect of CO as the Modifying Agent In Ethylene/Hexene-1 Polymerization

| Run No. | Type of Run | Modifying Agent,[a] CO ppm | Induction, mins. | Catalyst Activity, g/g/hr. | Productivity, Grams Polymer Per Gram Catalyst (g/g) | HLMI[b] | Density,[c] g/mℓ | ESCR,[d] hrs. |
|---|---|---|---|---|---|---|---|---|
| 1 | Control | 0 | 10 | 4110 | 3910 | 8.6 | .9490 | 335 |
| 2 | Invention | 0.2 | 30 | 4170 | 4170 | 9.4 | .9483 | 808 |
| 3 | Invention | 0.2 | 10 | 4750 | 3960 | 7.3 | .9489 | >1000 |
| 4 | Invention | 0.4 | 20 | 3180 | 3970 | 6.6 | .9498 | 839 |
| 5 | Invention | 0.4 | 20 | 3680 | 3680 | 9.2 | .9480 | 959 |

a. Based on approximate weight of ethylene plus hexene-1 present.
b. Test Method ASTM D 1238, Condition F.
c. Test Method ASTM D 1505.
d. Test Method ASTM D 1693, Condition A.

The data shown in TABLE 1 illustrates that at 0.2 ppm CO the catalyst activity and productivity were basically about the same as the control (run 1) but the ESCR was increased from 335 hours (run 1) without the CO to 800-1000 hours with the CO (runs 2 and 3). The data also show that increasing CO to 0.4 ppm in runs 4 and 5 provided little or no improvement in ESCR as compared to runs 2 and 3 and decreased the catalyst activity compared to runs 2 and 3 under the conditions employed.

The example just discussed involved batch operations of a bench reactor employing the slurry process. In continuous operation of larger reactors, it is only necessary to carefully adjust the feed rate of the modifying agent to the specified concentration. Feeding the modifying agent at very low rates is facilitated by using a diluted mixture of the modifying agent in a suitable inert gas or liquid.

Additional laboratory work was carried out employing carbon monoxide as well as other modifying agents as shown in TABLE II below.

TABLE II

Effect of Various Modifying Agents in Ethylene/Hexene-1 Polymerization

| Run No. | Type of Run | Modifying Agent | PPM[a] | Reactor Temp. °C | Run Time Min. | Catalyst Activity, g/g/hr. | Productivity, Grams Polymer Per Gram Catalyst (g/g) | HLMI[b] | Density,[c] g/cc m @ | ESCR,[d] hrs. |
|---|---|---|---|---|---|---|---|---|---|---|
| 6 | Invention | CO | 0.2 | 101 | 50 | 4750 | 3960 | 7 | 0.9489 | >1000 |
| 7 | Invention | CO | 0.2 | 102 | 60 | 4170 | 4170 | 9 | 0.9486 | 808 |
| 8 | Invention | CO | 0.4 | 101 | 75 | 3180 | 3970 | 7 | 0.9498 | 839 |
| 9 | Invention | CO | 0.4 | 102 | 60 | 3680 | 3680 | 9 | 0.9480 | 959 |
| 10 | Invention | $O_2$ | 0.2 | 101 | 50 | 4360 | 3630 | 11 | 0.9495 | 882 |
| 11 | Control for Runs 6-10 | None | 0 | 101 | 57 | 4110 | 3910 | 9 | 0.9490 | 335 |
| 12 | Control for Runs 6-10 | None | 0 | 101 | 45 | 5430 | 4070 | 10 | 0.9490 | 251 |
| 13 | Noninvention | $C_2H_2$ | 2.9 | 101 | 60 | 3170 | 3470 | 10 | 0.9507 | 357 |
| 14 | Noninvention | $(CH_3)_2CCH_2$ | 270 | 101 | 40 | 6050 | 4030 | 9 | 0.9511 | 180 |
| 15 | Noninvention | $(CH_3)_2CCH_2$ | 315 | 101 | 50 | 4790 | 3990 | 11 | 0.9490 | 378 |
| 16 | Control for Runs 13-15 | None | 0 | 101 | 47 | 4680 | 3660 | 12 | 0.9481 | 331 |
| 17 | Noninvention | $(CH_3)_2CCH_2$ | 315 | 105 | 57 | 3980 | 3780 | 31 | 0.9481 | 179 |
| 18 | Control for Run 17 | None | 0 | 105 | 50 | 4780 | 3990 | 27 | 0.9490 | 158 |
| 19 | Invention | $CH_3OH$ | 0.5 | 104 | 55 | 3640 | 3340 | 23 | 0.9433 | 769 |
| 20 | Invention | $CH_3OH$ | 0.5 | 104 | 45 | 5250 | 3940 | 36 | 0.9444 | 684 |
| 21 | Invention | $CH_3OH$ | 1.0 | 104 | 45 | 5510 | 4130 | 22 | 0.9468 | 651 |
| 22 | Invention | $CH_3OH$ | 1.0 | 103 | 40 | 5890 | 3930 | 22 | 0.9453 | 839 |
| 23 | Control for Runs 19-22 | None | 0 | 104 | 50 | 5020 | 4190 | 20 | 0.9476 | 223 |

## TABLE II (cont'd)

### Effect of Various Modifying Agents in Ethylene Hexene-1 Polymerization

| Run No. | Type of Run | Modifying Agent | PPM[a] | Reactor Temp. °C | Run Time Min. | Catalyst Activity, g/g/hr. | Productivity, Grams Polymer Per Gram Catalyst (g/g) | HLMI[b] | Density,[c] g/cc ml | ESCR,[d] hrs. |
|---|---|---|---|---|---|---|---|---|---|---|
| 24 | Invention | $(C_2H_5)_3N$ | 0.5 | 104 | 56 | 4090 | 3820 | 24 | 0.9478 | 166 |
| 25 | Invention | $(C_2H_5)_3N$ | 0.5 | 104 | 65 | 3070 | 3330 | 27 | 0.9442 | >1000 |
| 26 | Control for Runs 24-25 | None | 0 | 104 | 55 | 4270 | 3910 | 34 | 0.9438 | 519 |
| 27 | Control for Runs 24-25 | None | 0 | 104 | 60 | 3770 | 3770 | 22 | 0.9469 | 808 |
| 28 | Noninvention | $CCL_4$ | 0.5 | 104 | 65 | 3690 | 4000 | 26 | 0.9504 | 169 |
| 29 | Control for Run 28 | None | 0 | 104 | 60 | 4000 | 4000 | 26 | 0.9491 | 217 |

a. Based on approximate weight of ethylene plus hexene-1 present.
b. Test Method ASTM D 1238, Condition F.
c. Test Method ASTM D 1505.
d. Test Method ASTM D 1693, Condition A.

Runs 6 through 9 carried out using CO as the modifying agent when compared to control runs 11 and 12 support and confirm the results shown in TABLE 1 discussed above.

A comparison of invention run 10 with control runs 11 and 12 also demonstrates the effectiveness of using $O_2$ as the modifying agent according to the invention under the conditions employed.

A comparison of non-invention runs 13 through 15 with control run 16 and non-invention run 17 with control run 18 demonstrates that acetylene and isobutene are not suitable for use as modifying agents according to the invention under the conditions employed.

7

A comparison of invention runs 19 through 22 with control run 23 establishes that an alcohol, such as methanol, is suitable for use as a modifying agent in accordance with the present invention.

While run 24 is denoted as an invention run in TABLE II, because an amine, specifically triethylamine, was used as the modifying agent, the run appears to be anomalous. Invention run 25, also employing triethylamine as the modifying agent, demonstrates results consistent with inveniton runs employing other modifying agents within the scope of the present invention and compared with control run 26 shows approximately a two fold improvement in ESCR. Also the results from control run 27 appeared to be anomalous in comparison to the other control runs wherein no modifying agent was employed.

Runs 28 and 29 simply show that carbon tetrachloride is not suitable for use as a modifying agent in accordance with the present invention under the conditions employed.

Thus the results shown in TABLE II show that carbon monoxide, oxygen, an alcohol (methanol), and an amine (triethylamine) are suitable for use as modifying agents in accordance with the present invention and that acetylene, isobutene and carbon tetrachloride are not suitable for use as modifying agents in accordance with the present invention under the conditions employed.

## Claims

1. A process for preparing ethylene homo- und copolymers having increased environmental stress cracking resistance, by polymerizing a feedstream selected from ethylene and mixtures of ethylene with at least one other aliphatic mono-1-olefin containing from 3 to 10 carbon atoms in the presence of a chromium based polymerization catalyst producing polymers containing terminal vinyl unsaturation which catalyst is exposed to a modifying agent prior to or during the polymerization reaction,
   **characterized in** that said polymerization is carried out as a gas phase or slurry polymerization, said modifying agent is selected from carbon monoxide, carbonyl sulfide, hydrogen sulfide, oxygen, water, alcohols, aldehydes, ketones, mercaptans, amines and mixtures of any two or more thereof, and the amount of modifying agent employed is within the range of 0.01 to 2 parts by weight per million based on total olefin present during the polymerization reaction.

2. The process of claim 1 characterized in that the amount of modifying agent employed is the amount necessary to at least double and preferably the amount necessary to at least triple the environmental stress cracking resistance of the polymer produced compared to the polymer produced with the same catalyst except for the presence of the modifying agent under such conditions that the melt index, density and comonomer contents of the polymer produced are identical.

3. The process of claim 1 characterized in that the amount of modifying agent employed is less than the amount of modifying agent which will reduce the catalyst activity, in grams of polymer per gram of catalyst per hour, 25 percent compared to the catalyst activity in the absence of modifying agent under otherwise identical polymerization times and conditions.

4. The process of claim 1 characterized in that the amount of modifying agent employed is less than the amount of modifying agent which will reduce the catalyst activity, in grams of polymer per gram of catalyst per hour, 10 percent compared to the catalyst activity in the absence of modifying agent.

5. The process of claim 1 characterized in that the amount of modifying agent employed is less than the amount of modifying agent which will reduce the catalyst activity, in grams of polymer per gram of catalyst per hour, 5 percent compared to the catalyst activity in the absence of modifying agent.

6. The process of any of the preceding claims characterized in that the modifying agent is added to the feedstream.

7. The process of any of the preceding claims characterized in that the amount of modifying agent employed is within the range of from 0.1 to 1 parts by weight per million based on total olefin present during the polymerization reaction when said modifying agent is selected from carbon monoxide, carbonyl sulfide, hydrogen sulfide, oxygen and water, and the amount of modifying agent employed is within the range of from 0.2 to 2 parts by weight per million based on total olefin present during the polymerization reaction when said modifying agent is selected from alcohols, aldehydes, ketones, mercaptans, and amines.

8. The process of any of the preceding claims characterized in that the amount of modifying agent employed is within the range of from 0.1 to 0.7 parts by weight per million based on total olefin present during the polymerization reaction when said modifying agent is selected from carbon monoxide, carbonyl sulfide, hydrogen sulfide, oxygen and water, and the amount of modifying agent employed is within the range of from 0.2 to 1.5 parts by weight per million based on total olefin present during the polymerization reaction when said modifying agent is selected from alcohols, aldehydes, ketones, mercaptans, and amines.

9. The process of claim 1 characterized in that the polymerization catalyst is chromium oxide supported on silica.

10. The process of any of the preceding claims characterized in that said modifying agent is carbon monoxide or methanol.

11. The process of claim 10 characterized in that said modifying agent is carbon monoxide.

**Revendications**

1. Procédé de préparation de homo- et de copolymères ayant des propriétés améliorées de résistance au fendillement par contrainte sous l'effet de l'environnement, par polymérisation d'un flux d'alimentation choisi parmi l'éthylène et les mélanges d'éthylène avec au moins une autre mono-1-oléfine aliphatique contenant 3 à 10 atomes de carbone en présence d'un catalyseur de polymérisation à base de chrome produisant des polymères contenant des insaturations vinyliques terminales, lequel catalyseur est exposé à un agent modificateur avant ou pendant la réaction de polymérisation, **caractérisé en ce que** ladite polymérisation s'effectue en tant que polymérisation en phase gazeuse ou en suspension épaisse, que ledit agent modificateur est choisi parmi l'oxyde de carbone, le sulfure de carbonyle, l'hydrogène sulfuré, l'oxygène, l'eau, les alcools, les aldéhydes, les cétones, les mercaptans, les amines et les mélanges de deux quelconques de ces composés ou davantage et que la quantité d'agent modificateur utilisé se situe dans la gamme allant de 0,01 à 2 parties par million en poids, sur la base de l'oléfine totale présente durant la réaction de polymérisation.

2. Procédé selon la revendication 1, caractérisé en ce que la quantité d'agent modificateur utilisé est une quantité nécessaire pour au moins doubler et de préférence en une quantité nécessaire pour au moins tripler la résistance au fendillement par contrainte sous l'effet de l'environnement du polymère produit, par comparaison avec le polymère produit avec le même catalyseur, sauf pour la présence de l'agent modificateur, dans des conditions telles que l'indice de fusion, la densité et la teneur en comonomère du polymère produit soient identiques.

3. Procédé selon la revendication 1, caractérisé en ce que la quantité d'agent modificateur utilisé est inférieure à la quantité d'agent modificateur qui réduirait l'activité du catalyseur, en grammes de polymère par gramme de catalyseur par heure, de 25 pour-cent par comparaison avec l'activité du catalyseur en absence d'agent modificateur avec des durées et des conditions de polymérisation par ailleurs identiques.

4. Procédé selon la revendication 1, caractérisé en ce que la quantité d'agent modificateur employé est inférieure à la quantité d'agent modificateur qui réduirait l'activité du catalyseur, en grammes de polymère par gramme de catalyseur par heures, de 10 pour-cent par comparaison à l'activité du catalyseur en absence d'agent modificateur.

5. Procédé selon la revendication 1, caractérisé en ce que la quantité d'agent modificateur employé est inférieure à la quantité d'agent modificateur qui réduirait l'activité du catalyseur en grammes de polymère par gramme de catalyseur par heure, de 5 pour-cent par comparaison à l'activité du catalyseur en absence d'agent modificateur.

6. Procédé selon l'une quelconque des revendications précédentes, caractérisé en ce que l'agent modificateur est ajouté au flux d'alimentation.

7. Procédé selon l'une quelconque des revendications précédentes, caractérisé en ce que la quantité d'agent modificateur employé se situe à l'intérieur de la gamme allant de 0,1 à 1 partie par million en poids, sur la base de l'oléfine totale présente durant la réaction de polymérisation, lorsque ledit agent modificateur est choisi parmi l'oxyde de carbone, le sulfure de carbonyle, l'hydrogène sulfuré, l'oxygène et l'eau et que la quantité d'agent modificateur utilisé se situe dans la gamme allant de 0,2 à 2 parties par million en poids, sur la base de l'oléfine totale présente durant la réaction de polymérisation lorsque ledit agent modificateur est choisi parmi les alcools, les aldéhydes, les cétones, les mercaptans et les amines.

8. Procédé selon l'une quelconque des revendications précédentes, caractérisé en ce que la quantité d'agent modificateur employé se situe à l'intérieur de la gamme allant de 0,1 à 0,7 parties par million en poids, sur la base de l'oléfine totale présente durant la réaction de polymérisation, lorsque ledit agent modificateur est choisi parmi l'oxyde de carbone, le sulfure de carbonyle, l'hydrogène sulfuré, l'oxygène et l'eau et que la quantité d'agent modificateur utilisé se situe dans la gamme allant de 0,2 à 1,5 parties par million en poids, sur la base de l'oléfine totale présente durant la réaction de polymérisation lorsque ledit agent modificateur est choisi parmi les alcools, les aldéhydes, les cétones, les mercaptans et les amines.

9. Procédé selon la revendication 1, caractérisé en ce que le catalyseur de polymérisation est de l'oxyde de chrome sur un support de silice.

10. Procédé selon l'une quelconque des revendications précédentes, caractérisé en ce que ledit agent modificateur est l'oxyde de carbone ou le méthanol.

11. Procédé selon la revendication 10, caractérisé en ce que ledit agent modificateur est l'oxyde de carbone.

## Patentansprüche

1. Verfahren Zur Herstellung von Ethylen-Homopolymeren und -Copolymeren mit erhöhter Spannungsrissbeständigkeit durch Polymerisation eines Einsatzmaterialstroms, der unter Ethylen und Gemischen aus Ethylen mit mindestens einem weiteren aliphatischen Mono-1-olefin mit 3 - 10 Kohlenstoffatomen ausgewählt ist, in Gegenwart eines Polymerisationskatalysators auf Chrombasis unter Bildung von Polymeren mit einem Gehalt an einer Vinyldoppelbindung, wobei der Katalysator vor oder während der Polymerisationsreaktion einem Modifikationsmittel ausgesetzt wird, dadurch gekennzeichnet, dass die Polymerisation als Gasphasenpolymerisation oder Aufschlämmungspolymerisation durchgeführt wird, dass das Modifikationsmittel unter Kohlenmonoxid, Carbonylsulfid, Schwefelwasserstoff, Sauerstoff, Wasser, Alkoholen, Aldehyden, Ketonen, Mercaptanen, Aminen und Gemischen aus zwei oder mehr dieser Bestandteile ausgewählt wird und dass die Mengen des verwendeten Modifikationsmittels im Bereich von 0,01 bis 2 Gewichtsteilen pro Million, bezogen auf das während der Polymerisationsreaktion vorhandene Gesamtolefin liegen.

2. Verfahren nach Anspruch 1, dadurch gekennzeichnet, dass es sich bei der Menge des eingesetzten Modifikationsmittels um die Menge handelt, die erforderlich ist, um die Spannungsrissbeständigkeit des gebildeten Polymeren mindestens zu verdoppeln oder vorzugsweise mindestens zu verdreifachen, und zwar im Vergleich zu dem Polymeren, das mit dem gleichen Katalysator mit Ausnahme der Abwesenheit des Modifikationsmittels unter solchen Bedingungen erhalten worden ist, dass der Schmelzindex, die Dichte und der Comonomergehalt des gebildeten Polymeren identisch sind.

3. Verfahren nach Anspruch 1, dadurch gekennzeichnet, dass die Menge des eingesetzten Modifikationsmittels geringer ist als die Menge des Modifikationsmittels, die die Katalysatoraktivität, angegeben in Gramm Polymer pro Gramm Katalysator pro Stunde, um 25 % im Vergleich zur Katalysatoraktivität in Abwesenheit des Modifikationsmittels unter ansonsten identischen Polymerisationszeiten und -bedingungen verringert.

4. Verfahren nach Anspruch 1, dadurch gekennzeichnet, dass die Menge des eingesetzten Modifikationsmittels geringer ist als die Menge an Modifikationsmittel, die die Katalysatoraktivität, angegeben in Gramm Polymer pro Gramm Katalysator pro Stunde, um 10 % im Vergleich zur Katalysatoraktivität in Abwesenheit von Modifikationsmittel verringert.

5. Verfahren nach Anspruch 1, dadurch gekennzeichnet, dass die Menge des eingesetzten Modifikationsmittels geringer ist als die Menge an Modifikationsmittel, die die Katalysatoraktivität, angegeben in Gramm Polymer pro Gramm Katalysator pro Stunde, um 5 % im Vergleich zur Katalysatoraktivität in Abwesenheit von Modifikationsmittel verringert.

6. Verfahren nach einem der vorstehenden Ansprüche, dadurch gekennzeichnet, dass das Modifikationsmittel dem Einsatzmaterialstrom zugesetzt wird.

7. Verfahren nach einem der vorstehenden Ansprüche, dadurch gekennzeichnet, dass die Menge des verwendeten Modifikationsmittels im Bereich von 0,1 bis 1 Gewichtsteil pro Million, bezogen auf das während der Polymerisationsreaktion vorhandene Gesamtolefin liegt, wenn das Modifikationsmittel unter Kohlenmonoxid, Carbonylsulfid, Schwefelwasserstoff, Sauerstoff und Wasser ausgewählt ist, und dass die Menge des eingesetzten Modifikationsmittels im Bereich von 0,2 bis 2 Gewichtsteilen pro Million, bezogen auf das während der Polymerisationsreaktion vorhandene Gesamtolefin liegt, wenn das Modifikationsmittel unter Alkoholen, Aldehyden, Ketonen, Mercaptanen und Aminen ausgewählt ist.

8. Verfahren nach einem der vorstehenden Ansprüche, dadurch gekennzeichnet, dass die Menge des verwendeten Modifikationsmittels im Bereich von 0,1 bis 0,7 Gewichtsteil pro Million, bezogen auf das während der Polymerisationsreaktion vorhandene Gesamtolefin liegt, wenn das Modifikationsmittel unter Kohlenmonoxid, Carbonylsulfid, Schwefelwasserstoff, Sauerstoff und Wasser ausgewählt ist, und dass die Menge des eingesetzten Modifikationsmittels im Bereich von 0,2 bis 1,5 Gewichtsteilen pro Million, bezogen auf das während der Polymerisationsreaktion vorhandene Gesamtolefin liegt, wenn das Modifikationsmittel unter Alkoholen, Aldehyden, Ketonen, Mercaptanen und Aminen ausgewählt ist.

9. Verfahren nach Anspruch 1, dadurch gekennzeichnet, dass es sich beim Polymerisationskatalysator um auf Siliciumdioxid als Träger aufgebrachtes Chromoxid handelt.

10. Verfahren nach einem der vorstehenden Ansprüche, dadurch gekennzeichnet, dass es sich beim Modifikationsmittel um Kohlenmonoxid oder Methanol handelt.

11. Verfahren nach Anspruch 10, dadurch gekennzeichnet, dass es sich beim Modifikationsmittel um Kohlenmonoxid handelt.